# EUROPÄISCHE PATENTSCHRIFT

(11) **EP 1 642 767 B1**
(45) Veröffentlichungstag und Bekanntmachung des Hinweises auf die Patenterteilung: **24.10.2007**
(21) Anmeldenummer: 05104263.8
(22) Anmeldetag: 19.05.2005
(51) Int. Cl.: B60Q 1/48, B60T 7/22

(54) **Verfahren zur Einparkunterstützung für ein Fahrzeug**
Method for parking assistance of a vehicle
Procédé d'assistance au stationnement d'un véhicule

(30) Priorität: 30.09.2004 DE 102004047478
(43) Veröffentlichungstag der Anmeldung: 05.04.2006
(73) Patentinhaber: ROBERT BOSCH GMBH, 70442 Stuttgart (DE)
(72) Erfinder: Danz, Christian, 70469 Stuttgart (DE); Schmid, Dirk, 75397 Simmozheim (DE); Lehner, Philipp, 75417 Muehlacker (DE); Schaaf, Gunther, 70806 Kornwestheim (DE); Lee, Wei-Chia, D-71229 Leonberg (DE)

(56) Entgegenhaltungen:
- DE-U1- 20 300 405
- DE-U1- 29 804 296
- US-A- 2 144 286
- US-A- 4 931 930
- US-B1- 6 424 895

## Beschreibung

### Stand der Technik

Die Erfindung geht aus von einem Verfahren zur Einparkunterstützung für ein Fahrzeug nach der Gattung des Hauptanspruchs. Es ist schon bekannt, im Fahrzeug Abstandsensoren vorzusehen, die den Abstand des Fahrzeugs zu Hindernissen in der Fahrzeugumgebung bestimmen und den Fahrer vor einem Zusammenstoß mit den Hindernissen warnen. Ferner ist es bekannt, eine Parklücke mit entsprechenden Sensoren zu vermessen und einen Fahrweg des Fahrzeugs von der aktuellen Position in die Parklücke zu berechnen. Der Fahrer wird dann entweder durch die Ausgabe von Fahrhinweisen in die Parklücke gelenkt oder das Fahrzeug wird automatisch in die Parklücke gesteuert. Die Parklücken sind dabei im Allgemeinen durch andere, geparkte Fahrzeuge begrenzt. Ferner können auch Wände oder Säulen, insbesondere in Tiefgaragen, eine Parklücke begrenzen. Diese Hindernisse haben gemeinsam, dass sie zumindest auf der Höhe des Stoßfängers des Fahrzeugs verlaufen und daher durch Sensoren am Fahrzeug, insbesondere Ultraschallsensoren, optische Sensoren oder Radarsensoren, gut detektiert werden können. Eine Parklücke kann jedoch auch durch eine entsprechend gestaltete Straßenform begrenzt sein. Insbesondere ist eine Parklücke an einem Straßenrand möglicherweise durch einen Bordstein oder eine ähnliche Absperrung begrenzt. In Parkhäusern können mitunter auch andere Elemente, wie z.B. Stangen oder andere Begrenzungsmittel am Boden, montiert sein, um dem Fahrer eine Rückmeldung darüber zu geben, dass er eine Begrenzung einer Parklücke erreicht hat.

Aus der DE 298 04 296 U1 ist es bekannt, Ultraschallsensoren seitlich am Fahrzeug anzubringen, um mittels der Ultraschallsensoren den Verlauf des Bordsteins zu erfassen. Wird der Bordstein erreicht, so wird dem Fahrer ein Signal ausgegeben.

### Vorteile der Erfindung

Das erfindungsgemäße Verfahren zur Einparkunterstützung mit den Merkmalen des Hauptanspruchs hat demgegenüber den Vorteil, dass ein Fahrwiderstand des Fahrzeugs so ausgewertet wird, dass bei einer Änderung des Fahrwiderstands über ein vorgegebenes Maß eine Begrenzung der Parklücke ermittelt wird. Hierdurch kann auf die Anbringung zusätzlicher Sensoren, die auf den Bordstein gerichtet sind, verzichtet werden. Die Sensoren können daher auf eine Erfassung von Hindernissen in der Fahrzeugumgebung selbst optimiert werden. Dennoch kann einem Fahrer eine Begrenzung einer Parklücke angezeigt werden, die sich in einer Änderung des Fahrwiderstands wiederspiegelt. Zudem kann die Begrenzung für eine rechnerische Auswertung der Parklückengröße verwendet werden, ohne dass hierfür die Sensoren eine gesonderte Auswertung solcher Fahrhindernisse durchführen müssen. Wird der Verlauf des Bordsteins aus den Positionen geparkter Fahrzeuge extrapoliert, kann es zu Fehleinschätzungen infolge eines gekrümmten Straßenverlaufes oder infolge schief oder zum Teil auf dem Bordstein geparkter Fahrzeuge kommen. Die Erfassung des Bordsteins über eine Änderung des Fahrwiderstandes ermöglicht damit eine Korrektur einer solchen Fehldetektion.

Durch die in den Unteransprüchen aufgeführten Maßnahmen sind vorteilhafte Weiterbildungen und Verbesserungen des im Hauptanspruch angegebenen Verfahrens zur Einparkunterstützung für ein Fahrzeug möglich. Besonders vorteilhaft ist es, einen Verlauf eines Bordsteins aus wenigstens einer erfassten Änderung des Fahrwiderstands herzuleiten. Insbesondere für den Fall, wenn ein Fahrzeug mit beiden Rädern - nacheinander oder zugleich- gegen ein Hindernis fährt, kann unter Berücksichtigung der Position der Räder zu diesem Zeitpunkt ein Verlauf des Hindernisses extrapoliert werden. Auf einfache Weise kann damit eine Begrenzung einer Parklücke zur weiteren Auswertung durch eine Einparkunterstützung erfasst werden.

Insbesondere ist es vorteilhaft, die nunmehr neu erfassten Begrenzungen der Parklücke für eine Berechnung eines neuen Einparkweges in die Parklücke zu berücksichtigen.

Es ist ferner vorteilhaft, dem Fahrer auszugeben, dass eine Änderung des Fahrwiderstandes eingetreten ist. Möglicherweise hat der Fahrer selber die Änderung noch nicht bemerkt und wird gegebenenfalls versuchen, durch eine höhere Leistungsabforderung den Fahrwiderstand zu überwinden. Wird der Fahrer rechtzeitig gewarnt, so kann er z.B. auf ein Hinauffahren eines Bürgersteigs verzichten und somit die Fahrzeugbereifung schonen.

Ferner ist es vorteilhaft, eine Eingabeeinheit vorzusehen, mit der die Änderung des Fahrwiderstands für die Einparkunterstützung im Weiteren ignoriert wird. Dies ist z.B. in den Fällen vorteilhaft, bei denen das Fahrzeug halb auf einem Bordstein geparkt werden soll. Hier wird mit Erreichen der Bordsteinkante die Begrenzung der Parklücke angenommen. Für diese Ausnahmefälle hat der Benutzer erfindungsgemäß die Gelegenheit, die Einparkeinrichtung zu korrigieren.

Besonders gut ist der Fahrwiderstand über Elemente des Antriebsstrangs abgreifbar, da deren Daten im Allgemeinen auf entsprechenden Datenbussen im Fahrzeug zu Verfügung stehen und von einer entsprechenden Steuereinheit einer Einparkvorrichtung abgegriffen werden können.

Ferner kann in vorteilhafter Weise auch der Bremsdruck ausgewertet werden, der erforderlich ist, das Fahrzeug im Stillstand zu halten. Bleibt das Fahrzeug stehen ohne den erforderlichen Bremsdruck zu überschreiten, die in einer besonderen Ausführungsform von der aktuellen Hangneigung abhängig ist, so ist von einem Erreichen eines Bordsteins auszugehen.

In einer weiteren Ausführungsform kann auch ein Beschleunigungssensor vorgesehen sein, der die Beschleunigung des Fahrzeugs in Längsrichtung misst. Eine plötzliche Änderung des Beschleunigungswertes, die auf eine plötzliche Änderung des Fahrwiderstandes zurückgeht, ist hierdurch detektierbar.

### Zeichnung

Ausführungsbeispiele der Erfindung sind in der Zeichnung dargestellt und in der nachfolgenden Beschreibung näher erläutert. Es zeigen
Figur 1 ein Kraftfahrzeug mit entsprechenden Einrichtungen zur Durchführung des erfindungsgemäßen Verfahrens,
Figur 2 eine Änderung des Fahrwiderstands bei Erreichen eines Hindernisses,
Figuren 3 und 4 ein Anwendungsbeispiel für das erfindungsgemäße Verfahren.
Beschreibung des Ausführungsbeispiels

Das erfindungsgemäße Verfahren kann dazu angewendet werden, einem Fahrer eine Begrenzung einer Parklücke anzuzeigen. Insbesondere ist es jedoch bei derartigen Verfahren vorteilhaft, bei denen mittels am Fahrzeug angeordneter Sensoren eine Parklücke vermessen wird und anschließend ein Weg in die Parklücke berechnet wird, um entweder den Fahrer mittels Fahranweisungen zu führen oder um automatisch bzw. halbautomatisch das Einparken vorzunehmen. Um Fehler bei der Parklückenerfassung feststellen zu können, wird hierbei der Fahrwiderstand zusätzlich ausgewertet. Damit werden derartige halbautomatische oder automatische Einparkverfahren für den Benutzer besser handhabbar, da Fehler durch eine fehlerhafte Detektion einer Parklückenposition vermindert werden. Somit kann sowohl eine Ausdehnung und Lage einer seitlichen Begrenzung einer Parklücke sowie eine Ausrichtung einer Parklücke erfolgreich korrigiert werden. Daher ist das erfindungsgemäße Verfahren zur Einparkunterstützung im Folgenden am Beispiel eines Verfahrens zum sogenannten semiautonomen Einparken erläutert. Über eine Parklückenvermessung wird der Fahrer hierbei bei der Suche nach einer ausreichend großen Parklücke unterstützt. Anschließend wird er dabei unterstützt, zügig in die Parklücke einzufahren, indem ihm ein Einparkweg vorgegeben wird. Das Lenken hierbei kann auch automatisch erfolgen, während die Beschleunigung oder das Verzögern des Fahrzeugs durch den Fahrer erfolgt. Ferner können jedoch auch nur Lenk-und Fahrkommandos ausgegeben werden.

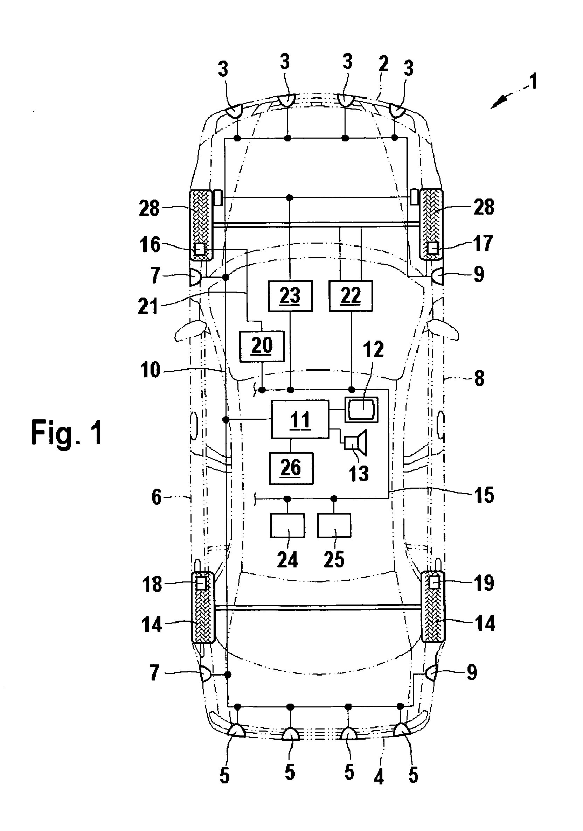

In der Figur 1 ist ein Fahrzeug zur Durchführung des erfindungsgemäßen Verfahrens und zum Durchführen eines Einparkvorgangs nach Anweisungen gezeigt. Das Kraftfahrzeug 1 weist an allen Fahrzeugseiten Abstandssensoren auf. An der Vorderseite 2 sind vier Abstandssensoren 3 angeordnet. An der Rückseite 4 sind ebenfalls vier Abstandssensoren 5 angeordnet. An der linken Fahrzeugseite 6 sind zwei Abstandssensoren 7 angeordnet. An der rechten Fahrzeugseite 8 sind ebenfalls zwei Abstandssensoren 9 angeordnet. Pro Fahrzeugseite können mehr, aber auch weniger Abstandssensoren vorgesehen sein. Die Abstandssensoren sind insbesondere als Ultraschallsensoren ausgeführt, können aber auch als Infrarotsensoren, als Radarsensoren oder als kapazitive Abstandssensoren ausgeführt sein. Die Abstandssensoren sind über eine Datenleitung 10 mit einer Auswerteeinheit 11 verbunden. Die Auswerteeinheit 11 misst die Abstände zu Hindernissen in der Umgebung des Fahrzeugs und warnt den Fahrer vor derartigen Hindernissen über eine hierfür vorgesehene Ausgabeeinheit. Die Ausgabeeinheit ist insbesondere als eine Anzeige 12 und/oder als ein Lautsprecher 13 ausgeführt. Somit können optische und/oder akustische Warnmeldungen an den Fahrer ausgegeben werden. Insbesondere ist die Auswerteeinheit 11 aber auch dazu ausgelegt, in einem Vorbeifahren an einer Parklücke die Länge der Parklücke zu messen, indem insbesondere über die seitlich angeordneten Abstandssensoren 7, 9 die Abstände des Fahrzeugs zu einer seitlichen Begrenzung ermittelt werden. Ferner ist ein Wegstreckensensor 24 vorgesehen, der die Bewegung des Fahrzeugs erfasst und der es erlaubt die gemessenen Abstandswerte räumlich zuzuordnen. Wird somit eine Parklücke einer hinreichenden Länge zwischen einem ersten und einem zweiten seitlich an der Straße geparkten Fahrzeug ermittelt, so berechnet die Auswerteeinheit 11 eine Einparktrajektorie in die Parklücke hinein. Gegebenfalls kann der Fahrer über eine in der Figur 1 nicht dargestellte Eingabeeinheit den Einparkvorgang starten. Die Auswerteeinheit 11 verfügt über eine Recheneinheit, um ausgehend von den erfassten Abstandsdaten den Weg in die Parklücke zu berechnen. Über die Anzeige 12 und/oder über den Lautsprecher 13 werden an den Fahrer entsprechende Fahranweisungen ausgegeben. Während des Einparkvorgangs wird mittels der Abstandssensoren 3, 5, 7, 9 der Abstand zu den Begrenzungen der Parklücke überwacht. Auch in eine senkrecht zum Straßenverlauf angeordnete Parklücke oder in eine schräg zum Straßenverlauf angeordnete Parklücke kann hiermit eingeparkt werden.

Bei der Vermessung der Parklücke können Messfehler auftreten, welche zu fehlerhaften Positionen der die Parklücke bestimmenden Fahrzeugecken führen. Bei einem anschließenden Einparken könnten diese Fehler zu einer Berührung der Räder mit dem Bordstein führen, wenn insbesondere die Tiefe der Parklücke zu groß gemessen wurde. Ferner können sich bei dem Einparkvorgang Abweichungen von dem geplanten Einparkweg in die Parklücke ergeben. Z.B. können aufgrund ungenauer Befolgung der Vorgaben des Systems durch den Fahrer Abweichungen entstehen. Hierdurch kann der Bordstein insbesondere von Hinterrädern 14 des Fahrzeugs berührt werden.

Um eine solche Berührung insbesondere des Bordsteins zu erkennen, ist die Auswerteeinheit 11 mit einem Datenbus 15 verbunden, der insbesondere als ein CAN-Bus ausgeführt ist. Über die Datenbusabfrage wird der aktuelle Fahrwiderstand des Fahrzeugs ermittelt. Hierzu werden kinematische Messgrößen von einzelnen Fahrzeugsystemen ausgewertet. Die Auswertung kann durch eines der folgenden, aber auch durch die Auswertung mehrerer der folgenden Systeme erfolgen:

Es kann eine Motorsteuerung ausgewertet werden, insbesondere hinsichtlich eines Vergleichs des dem Motor abverlangten Drehmoments.
Ferner kann auch die Drehzahl bzw. die Fahrpedalstellung herangezogen werden.
Ferner ist es möglich, die Getriebesteuerung auszuwerten und hierbei insbesondere die Kupplungspedalstellung zu berücksichtigen.

Ferner ist es möglich, Reifendrucksensoren 16, 17, 18, 19 auszuwerten, die in jedem Reifen angeordnet sind. Insbesondere sind auch Reifendrucksensoren an den Vorderreifen 28 vorgesehen. Reifendrucksensoren werden über ein Steuergerät 20 ausgewertet, wobei in der Figur 1 aus Gründen der Übersichtlichkeit der Zeichnung lediglich die Verbindung 21 des vorderen, linken Reifendrucksensors 16 mit dem Steuergerät 20 dargestellt ist.

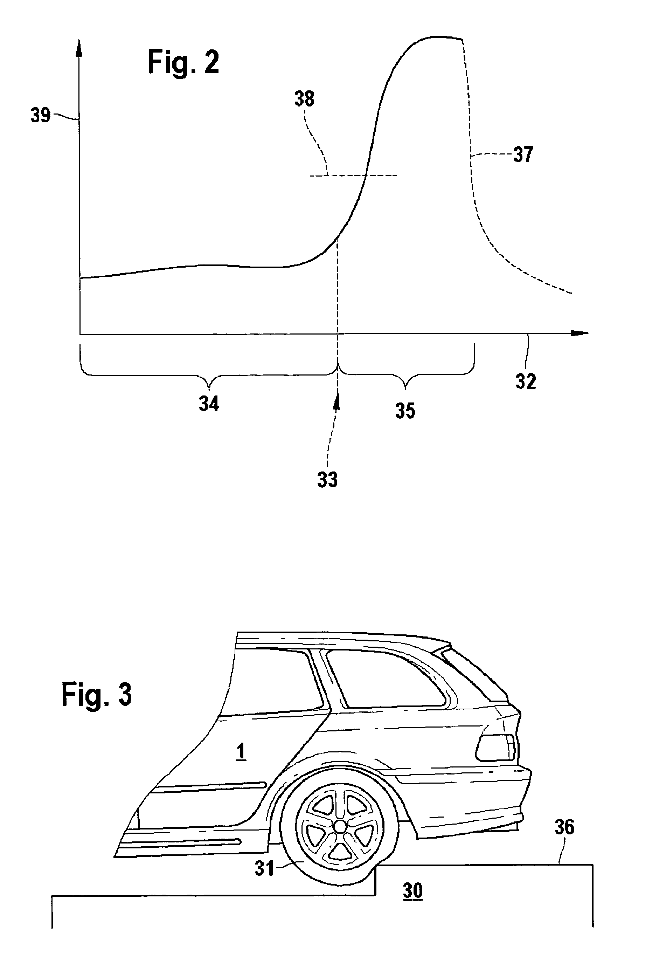

Die Funktionsweise des erfindungsgemäßen Verfahrens ist dabei anhand der Figuren 2 und 3 erläutert. In der Figur 3 ist das Fahrzeug 1 gezeigt, das auf einen Bordstein 30 zufährt. Hierbei berührt ein Reifen 31 den Bordstein 30. Befindet sich das Fahrzeug noch in einem Abstand zu dem Bordstein, so ist der Fahrwiderstand des Fahrzeugs niedrig. Der Fahrwiderstand über der Strecke ist in der Figur 2 dargestellt, wobei der Fahrwiderstand auf der Y-Achse 39 aufgetragen ist. Auf der X-Achse 32 ist die Wegstrecke dargestellt. An dem Punkt 33 der Fahrstrecke erreicht der Reifen 31 den Bordstein 30. Bis zu diesem Punkt ist der Fahrwiderstand in einem ersten Streckenabschnitt 34 niedrig. Es muss lediglich die Reibung gegenüber dem Straßenbelag überwunden werden, um das Fahrzeug zu bewegen. Ab dem Punkt 33 wird jedoch zunächst der Reifen 31 durch den Bordstein 30 deformiert. Der Fahrwiderstand steigt an, da der Motor nun auch die Arbeit zur Deformation des Reifens leisten muss. Fährt der Fahrer weiter, so wird das Fahrzeug angehoben, so dass es auf den Bordstein 30 fahren wird. Der Fahrwiderstand steigt jedoch an. Dies ist in dem zweiten Streckenabschnitt 35 in der Figur 2 anhand des Anstiegs des Fahrwiderstands erkennbar. Der Fahrwiderstand würde erst dann absinken, wenn der Reifen 31 auf der Oberseite 36 des Bordsteins 30 aufliegt. Der Verlauf des Fahrwiderstands ist in der Figur 2 gestrichelt dargestellt (Bezugszeichen 37).

Ein vorgegebener Grenzwert 38 für den Fahrwiderstand ist ebenfalls in der Figur 2 dargestellt. Wenn der Grenzwert 38 überschritten wird, dann wird eine Begrenzung einer Parklücke erfasst. Bleibt der Fahrwiderstand unterhalb dieser Grenze, dann wird davon ausgegangen, dass lediglich eine Bodenunebenheit oder etwas ähnliches vorgelegen hat. Insbesondere sind auch zum Teil bei einem Einparken abgeflachte Bordsteinkanten zu überfahren, die für ein Befahren geeignet und vorgesehen sind, so dass sich durch diese Bordsteinkanten der Fahrwiderstand kaum erhöht. Bevorzugt ist der Grenzwert 38 so vorgesehen, dass solche Bordsteinkanten keine Begrenzung der Parklücke auslösen. Die genauen Werte, ab denen eine entsprechende Begrenzung den Fahrwiderstand ist dabei von dem jeweiligen Fahrzeug abhängig, so ist z.B. die Hubleistung, die für ein Anheben des Fahrzeugs auf den Bordstein 30 geleistet werden muss, vom Fahrzeugtyp abhängig. Gleiches gilt auch für die Arbeit die geleistet werden muss, ein Fahrzeug anzufahren bzw. durch Schlaglöcher zu bewegen. Für ein schwereres Fahrzeug ist daher der Grenzwert 38 größer vorzusehen, als für ein leichtes Fahrzeug. Für die einzelnen, zuvor angeführten Fahrzeugtypen bzw. -größen sind jeweils gesonderte Grenzwerte vorzusehen.

Ein Grenzwert kann für eine entsprechende Drehmomentzahl des Motors betrachtet werden. Insbesondere ist hierbei nicht der Absolutwert des Drehmoments, der z.B. bei einer Steigung hoch sein kann, sondern vielmehr die Änderung des Drehmoments zu betrachten. In diesem Fall wäre das Drehmoment nach dem Ort oder nach der Zeit abzuleiten und die sich aus der ersten Ableitung ergebende Steigung ist für die Änderung des Fahrwidertands auszuwerten. Übersteigt der Wert der ersten Ableitung ein vorgegebenes Maß, so wird einem Einparkvorgang eine entsprechende Begrenzung einer Parklücke ermittelt. Zur Auswertung ist eine in der Figur 1 schematisch dargestellte Motor- bzw. Getriebesteuerung 22 über den Datenbus 15 mit der Auswerteeinheit 11 verbunden.

Ferner ist auch ein Bremsensteuergerät 23 mit der Auswerteeinheit 11 verbunden. Über das Bremsensteuergerät wird ausgewertet, ob nicht eine Fahrzeugbremse betätigt wird und daher den gestiegenen Fahrwiderstand verursacht hat. Ist dies der Fall, so wird die Änderung des Fahrwiderstandes hinsichtlich einer Auswertung einer Begrenzung einer Parklücke ignoriert.

In einer weiteren Ausführungsform weist das Bremsensteuergerät einen Bremsdrucksensor auf, der den angegebenen Bremsdruck misst. Wird festgestellt, dass sich die aktuelle Position des Fahrzeugs nicht ändert, so wird ― gegebenenfalls auch unter Berücksichtigung der Fahrzeugneigung - der Bremsdruck ermittelt, der für eine Stillstand des Fahrzeugs erforderlich wäre. Ist der tatsächlich anliegende Bremsdruck kleiner als der hierfür erforderliche Bremsdruck, z.B. wenn gar nicht gebremst wird, so beginnt ein Zeitzähler zu laufen. Überschreitet der Zeitraum des Stillstands einen vorgegebenen Schwellwert, so ist davon auszugehen, dass das Fahrzeug eine Bordsteinkante erreicht hat. Die Lage der Bordsteinkante kann somit erfasst werden.

In einer weiteren Ausführungsform kann auch wenigstens ein Beschleunigungssensor 25 vorgesehen sein, mittels dem insbesondere eine Längsbeschleunigung des Fahrzeugs erfasst werden kann. Eine Änderung des Fahrwiderstands kann damit auch aus einer gestiegenen, auf das Fahrzeug wirkenden Beschleunigung in Form einer Beschleunigungsänderung geschlossen werden. Fährt das Fahrzeug eine Bordsteinkante herauf, so wird das Fahrzeug durch die Bordsteinkante zunächst gebremst. Diese Verzögerung des Fahrzeugs ist mit dem Beschleunigungssensor 25 messbar. Hier kann bevorzugt die gemessene Beschleunigung mit einem Eingreifen des Fahrers mittels Bremse oder Gasgeben abgeglichen werden, so dass eine Beschleunigungsänderung dann als ein Erreichen einer Bordsteinkante interpretiert wird, wenn der Fahrer nicht oder sogar gegenläufig in die Fahrbewegung des Fahrzeugs eingegriffen hat, z.B. bei einem Gasgeben bei einer gemessenen Verzögerung des Fahrzeugs.

Ferner ist in einer bevorzugten Ausführungsform der Wegstreckensensor 24, der in der Figur 1 lediglich schematisch dargestellt ist, mit der Auswerteeinheit 11 verbunden. Über den Wegstreckensensor 24 kann der zurückgelegte Weg insbesondere mittels der Raddrehung ermittelt werden. Hierdurch kann die Position des Fahrzeugs im Bezug zu der Parklücke bestimmt werden, so dass in eine aufgrund der Messung durch die Abstandssensoren 3, 5, 7, 9 ermittelten Umgebungskarte die nunmehr neu bestimmten Abgrenzungen eingetragen werden können.

In einer bevorzugten Ausführungsform können die Reifendrucksensoren 16, 17, 18, 19 ausgewertet werden, um die in der Figur 3 gezeigte Deformation des Reifens 31 zu erfassen. Denn fährt der Reifen auf einen Bordstein 30, so wird individuell an dem jeweiligen Reifen durch den auf den Reifen wirkenden Druck ein Druckanstieg in dem Reifen 31 bewirkt. Die Raddrucksensoren können hierbei einzeln dahingehend ausgewertet werden, mit welchem Reifen das Fahrzeug 1 auf ein entsprechendes Hindernis gefahren ist. Hierdurch kann eine Lokalisierung der Hinderniserfassung erfolgen.

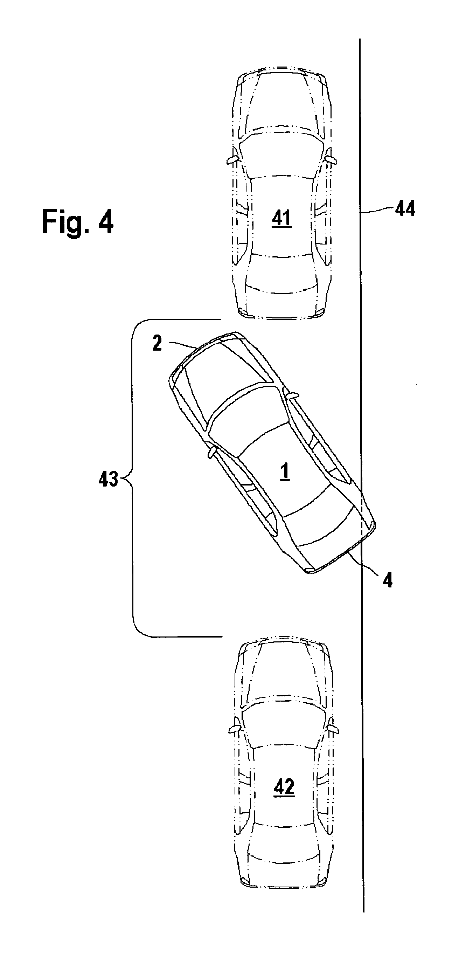

Ein Anwendungsfall ist in der Figur 4 dargestellt, bei der das Fahrzeug 1 bereits schräg zwischen einem ersten Fahrzeug 41 und einem zweiten, dahinter stehenden Fahrzeug 42 in eine Parklücke 43 eingeparkt ist. Stößt das Fahrzeug 1, das an einer rechten Straßenseite einparkt, rückwärts in die Parklücke 43 hinein, so kann das Fahrzeug nur mit dem rechten Hinterreifen 14 an den Bordstein 44 geraten. Wird in diesem Fall eine Änderung des Fahrwiderstands erfasst, so wird die damit erfasste Begrenzung der Parklücke dem rechten Hinterreifen 14 zugeordnet. Aus der Position der Fahrzeuge 41 und 42 sowie der punktuell erfassten Position des Bordsteins 44 wird der Verlauf des Bordsteins 44 berechnet und in eine Umgebungskarte für eine Korrektur bzw. für einen neuen Vorschlag eines Einparkwegs eingetragen. Damit kann auch ohne eine individuelle Zuordnung eines Reifens zur Hinderniserfassung eine Lagebestimmung des tatsächlichen Hindernisses erfolgen.

In einer besonderen Ausführungsform kann bei einer Änderung des Fahrwiderstands das Fahrzeug auch automatisch angehalten werden, z.B. durch eine automatische Betätigung der Bremse, um Beschädigungen des Fahrzeugs zu vermeiden.

Insbesondere wird ein gestiegener Fahrwiderstand für die Detektion eines Parklückenrandes erfasst. Jedoch kann z.B. bei einem unbefestigten Bankett der Straße ein Verlassen der Straße nicht gewünscht sein. Fährt ein Fahrer z.B. mit dem Vorderreifen 28 über eine derartige Kante herunter, so sinkt der Fahrwiderstand rapide ab, da das Fahrzeug über die Kante heruntergezogen wird. Auch in diesem Fall wird bevorzugt eine Begrenzung der Parklücke erfasst. In einer weiteren Ausführungsform kann auch das Signal des Wegstreckensensors abgeleitet werden, um die Geschwindigkeit des Fahrzeugs zu erhalten. Kommt es zu einer plötzlichen Änderung der Geschwindigkeit, so kann auch aus dem geänderten Geschwindigkeitssignal eine Änderung des Fahrwiderstands ermittelt werden.

Eine besonders zuverlässige Messung erhält man dann, wenn wenigstens zwei der oben genannten Messgrößen miteinander korreliert werden und auch bei einer ruckartigen Änderung einer der Größen eine Begrenzung einer Parklücke nur dann erfasst wird, wenn eine entsprechende Änderung bei wenigstens einer weiteren Größen aufgetreten ist.

Bei der Neuberechnung einer Parklücke kann in der Parklücke selbst rangiert werden. Steht das Fahrzeug jedoch sehr schräg und lässt die Parklücke keinen Platz für ein weiteres Rangieren zu, so kann in einer weiteren Ausführungsform der Parkvorgang auch neu gestartet werden, so dass das Fahrzeug zunächst vollständig aus der Parklücke herausfährt.

Will der Fahrer in einer Parklücke parken, bei der die eine Fahrzeughälfte auf einem hohen Bürgersteig steht, wie dies mitunter erforderlich ist, so kann er eine Eingabeeinheit 26 betätigen, nach deren Betätigung die Auswerteeinheit 11 eine Änderung des Fahrwiderstandes unberücksichtigt lassen wird. In diesem Fall nimmt der Fahrer bewusst in Kauf, dass er einen hohen Bordstein überfährt, um seinen gewünschten Parkplatz zu erhalten. Durch das erfindungsgemäße Verfahren zur Einparkunterstützung soll er hiervon jedoch nicht gegen seinen Willen abgehalten werden.

## Patentansprüche

1. Verfahren zur Einparkunterstützung für ein Fahrzeug, wobei eine Parklücke vermessen wird, wobei ein Fahrwiderstand des Fahrzeugs erfasst wird und wobei wenn sich der Fahrwiderstand über ein vorgegebenes Maß hinaus ändert eine Begrenzung der Parklücke ermittelt wird.

2. Verfahren nach Anspruch 1, **dadurch gekennzeichnet, dass** die Abmessungen der Parklücke vermessen werden und dass bei einer Erfassung einer Begrenzung der Parklücke über eine Änderung des Fahrwiderstandes die zuvor erfassten Abmessungen der Parklücke korrigiert werden.

3. Verfahren nach Anspruch 2, **dadurch gekennzeichnet, dass** ein neuer Einparkweg in die Parklücke mit den neu bestimmten Abmessungen berechnet wird.

4. Verfahren nach einem der vorherigen Ansprüche, **dadurch gekennzeichnet, dass** bei der Änderung des Fahrwiderstands über das vorgegebene Maß ein Hinweis auf eine Parklückenbegrenzung ausgegeben wird.

5. Verfahren nach einem der vorherigen Ansprüche, **dadurch gekennzeichnet, dass** eine Benutzereingabe vorgesehen ist, durch die die Änderung des Fahrwiderstands über das vorgegebene Maß für eine weitere Einparkunterstützung ignoriert wird.

6. Verfahren nach einem der vorherigen Ansprüche, **dadurch gekennzeichnet, dass** bei einer Änderung des Fahrwiderstands über das vorgegebene Maß das Fahrzeug automatisch angehalten wird.

7. Verfahren nach einem der vorherigen Ansprüche, **dadurch gekennzeichnet, dass** eine Änderung des Fahrwiderstands über eine Auswertung von Komponenten des Antriebsstrangs des Fahrzeugs ermittelt wird.

8. Verfahren nach einem der vorherigen Ansprüche, **dadurch gekennzeichnet, dass** eine Änderung des Fahrwiderstands über eine Auswertung des Bremsdrucks des Fahrzeugs ermittelt wird.

9. Verfahren nach einem der vorherigen Ansprüche, **dadurch gekennzeichnet, dass** eine Beschleunigung des Fahrzeugs in Fahrtrichtung gemessen wird und dass aus einer Verzögerung oder einer Beschleunigung des Fahrzeugs auf eine Änderung des Fahrwiderstands geschlossen wird.

10. Verfahren nach einem der vorherigen Ansprüche, **dadurch gekennzeichnet, dass** aus einer erfassten Änderung des Fahrwiderstands unter Einbeziehung von gemessenen Abstandswerten ein Verlauf eines Bordsteins bestimmt wird.

11. Verfahren nach einem der vorherigen Ansprüche, **dadurch gekennzeichnet, dass** zur Bestimmung des Verlaufs eines Bordsteins ein Änderung eines Fahrwiderstands an wenigsten einem hinteren und an wenigstens einem vorderen Reifen des Fahrzeugs ausgewertet wird.

## Claims

1. Method for providing assistance for parking a vehicle, where in a parking space is measured, wherein a travelling resistance in the vehicle is sensed and wherein a boundary of the parking space is determined if the travelling resistance changes by more than a predefined degree.

2. Method according to Claim 1 **characterized in that** the dimensions of the parking space are measured, and **in that** when a boundary of the parking space is sensed by means of a change in the travelling resistance the previously-sensed dimensions of the parking space are corrected.

3. Method according to Claim 2 **characterized in that** a new parking path into the parking space is calculated with the newly determined dimensions.

4. Method according to one of the preceding claims, **characterized in that** when the travelling resistance changes by more than the predefined degree an indication of a parking space boundary is output.

5. Method according to one of the preceding claims, **characterized in that** a user input is provided as a result of which the change in the travelling resistance by more than the predefined degree is ignored in a further parking assistance operation.

6. Method according to one of the preceding claims, **characterized in that** when there is a change in the travelling resistance by more than the predefined degree the vehicle is automatically stopped.

7. Method according to one of the preceding claims, **characterized in that** a change in the travelling resistance is determined by evaluating components of the drive train of the vehicle.

8. Method according to one of the preceding claims, **characterized in that** a change in the travelling resistance is determined by evaluating the brake pressure of the vehicle.

9. Method according to one of the preceding claims, **characterized in that** acceleration of the vehicle in the direction of travel is measured, and **in that** a change in the travelling resistance is inferred from deceleration or acceleration of the vehicle.

10. Method according to one of the preceding claims, **characterized in that** a profile of a kerb is determined from a sensed change in the travelling resistance including measured distance values.

11. Method according to one of the preceding claims, **characterized in that** in order to determine the profile of a kerb, a change in a travelling resistance at at a least one rear tyre and at least one front tyre of the vehicle is evaluated.

## Revendications

1. Procédé d'assistance aux manoeuvres de stationnement d'un véhicule selon lequel on mesure un intervalle de stationnement, on saisit la résistance de roulage du véhicule et si la résistance de roulage varie au-delà d'une mesure prédéfinie, on limite l'intervalle de stationnement.

2. Procédé selon la revendication 1,
**caractérisé en ce qu'**
on mesure les dimensions de l'intervalle de stationnement et **en ce que** lors de la saisie d'une limitation de l'emplacement de stationnement, on corrige les dimensions préalablement saisies de l'intervalle de stationnement en fonction de la variation de la résistance de roulage.

3. Procédé selon la revendication 2,
**caractérisé en ce qu'**
on calcule un nouveau trajet dans l'intervalle de stationnement avec les dimensions nouvellement déterminées.

4. Procédé selon l'une quelconque des revendications précédentes,
**caractérisé en ce qu'**
en cas de variation de la résistance de roulage au-delà d'une mesure prédéfinie, on émet une indication concernant la limitation de l'emplacement de stationnement.

5. Procédé selon l'une quelconque des revendications précédentes,
**caractérisé en ce qu'**
on prévoit une entrée faite par l'utilisateur qui ignore la variation de la résistance de roulage au-delà de la mesure prédéfinie pour une autre assistance à la manoeuvre de stationnement.

6. Procédé selon l'une quelconque des revendications précédentes,
**caractérisé en ce qu'**
en cas de variation de la résistance de roulage au-delà de la mesure prédéfinie, on arrête automatiquement le véhicule.

7. Procédé selon l'une quelconque des revendications précédentes,
**caractérisé en ce qu'**
on détermine une variation de la résistance de roulage en exploitant des composants de la ligne de transmission du véhicule.

8. Procédé selon l'une quelconque des revendications précédentes,
**caractérisé en ce qu'**
on détermine une variation de la résistance de roulage par l'exploitation de la pression des freins du véhicule.

9. Procédé selon l'une quelconque des revendications précédentes,
**caractérisé en ce qu'**
on mesure l'accélération du véhicule dans la direction de déplacement et à partir d'une décélération ou d'une accélération du véhicule, on conclut à une variation de la résistance de roulage.

10. Procédé selon l'une quelconque des revendications précédentes,
**caractérisé en ce qu'**
à partir d'une variation saisie de la résistance de roulage, en tenant compte des distances mesurées, on détermine un tracé de bordure.

11. Procédé selon l'une quelconque des revendications précédentes,
**caractérisé en ce que**
pour déterminer le tracé de bordure, on exploite une variation de la résistance de roulage au moins au niveau de la roue arrière et au moins la roue avant du véhicule.
